# EUROPÄISCHE PATENTSCHRIFT

(11) **EP 1 129 121 B1**
(45) Veröffentlichungstag und Bekanntmachung des Hinweises auf die Patenterteilung: **18.12.2002**
(21) Anmeldenummer: 98952708.0
(22) Anmeldetag: 15.10.1998
(51) Int. Cl.: C08G 18/67, C08G 18/81

(54) **FORMKÖRPER AUS POLYURETHAN-WERKSTOFF, SOWIE HERSTELLUNG UND VERWENDUNG DESSELBEN**
MOULDED BODIES MADE FROM A POLYURETHANE MATERIAL, PRODUCTION AND USE THEREOF
CORPS MOULE EN POLYURETHANNE, SON PROCEDE DE PRODUCTION ET SON UTILISATION

(43) Veröffentlichungstag der Anmeldung: 05.09.2001
(73) Patentinhaber: Büchel, Thomas, 9494 Schaan (LI)
(72) Erfinder: Büchel, Thomas, 9494 Schaan (LI)
(74) Vertreter: Büchel, Kurt F.
(86) Internationale Anmeldenummer: EP9806558
(87) Internationale Veröffentlichungsnummer: WO00023493

(56) Entgegenhaltungen:
- EP-A- 0 262 488
- EP-A- 0 269 071
- GB-A- 1 512 553
- US-A- 4 787 850

## Beschreibung

### TECHNISCHES GEBIET

Die Erfindung betrifft einen flexiblen, gegebenenfalls elastischen, verformbaren Werkstoff auf der Basis von Polyurethan (PU), der durch nachfolgende Härtung in eine stabile Endform überführbar ist, wobei der Werkstoff eine Polyurethanmatrix enthält, die über eine Vielzahl von reaktiven Doppelbindungen, insbesondere radikalisch polymerisierbaren, ethylenisch ungesättigten Gruppen verfügt, die in chemisch gebundener Form als Teil der Polyurethanmatrix, beispielsweise einer Acrylsäure oder eines Acrylsäurederivats, vorliegen. Die Erfindung bezieht sich weiters auf ein Verfahren zur Herstellung von gehärteten Formkörpern aus diesem Werkstoff sowie auf deren Verwendung.

### STAND DER TECHNIK

Aus dem europäischen Patent EP 0 262 488 ist ein neuartiger reaktiver organischer Füllstoff in Form eines Feststoffpulvers für polymerisierbare Zusammensetzungen bekannt, welcher aus einem Polyurethan-Werkstoff besteht, der sich durch einen hohen Gehalt an reaktiven Doppelbindungen auszeichnet und der mit den Komponenten der zu füllenden Matrix, insbesondere über copolymerisierbare Gruppen, einen festen Verbund zwischen Füllstoff und Matrix liefert. Nach dem Auspolymerisieren ergibt dies Produkte, die eine wesentlich verbesserte Rissfestigkeit, Belastbarkeit und Abriebfestigkeit aufweisen. Solche Zusammensetzungen finden auf verschiedenen technischen Gebieten Anwendung; besondere Bedeutung haben sie als Dentalwerkstoffe erlangt. Unter Dentalwerkstoffen werden z.B. Zahnfüllmassen für die konservierende Zahnbehandlung und Materialien zur Herstellung von künstlichen Zähnen oder Zahnteilen, wie Kronen oder Inlays, verstanden.

Dieser Polyurethan-Werkstoff, der in verschiedenen Modifikationen auch in der vorliegenden Erfindung eingesetzt wird, ist im allgemeinen glasklar und wird durch eine nicht radikalisch ausgelöste Reaktion hergestellt. Er enthält ausserdem je Gramm der Polyurethanmatrix mindestens 0,5 mMol, vorzugsweise 0,5 bis 5, insbesondere 1,4 bis 2,6 mMol/g an reaktiven Doppelbindungen (bestimmt mittels Differential Scanning Calorimetry, "DSC-Methode"; Details der Methode sind in EP 0 262 488 beschrieben), die vorzugsweise als strukturelle Bestandteile der Polyurethanmatrix vorliegen und daher mit Lösungsmitteln nicht extrahierbar sind.

Unter dem Begriff "reaktive Doppelbindungen" sind im Nachfolgenden in erster Linie jene mit der DSC-Methode (siehe EP 0 262 488) bestimmbaren Doppelbindungen zu verstehen, sofern im Einzelnen keine anderslautende Definition angegeben wird oder aus dem Sinnzusammenhang keine andere Interpretation entnehmbar ist.

Der hohe Gehalt an nicht-extrahierbaren reaktiven Doppelbindungen wird dadurch erreicht, dass die Ausgangsmaterialien - vorzugsweise Isocyanate und Hydroxygruppen enthaltende Acrylate, insbesondere Hydroxy(meth)acrylatedurch eine nicht radikalisch ausgelöste Reaktion, d.h. im wesentlichen durch eine Polyadditionsreaktion (nachfolgend auch als "Urethanreaktion" bezeichnet), polymerisiert und vernetzt werden, so dass 75 bis 90% der in den eingesetzten Monomeren enthaltenen, ethylenisch ungesättigten Doppelbindungen auch noch im fertig polymerisierten PU-Werkstoff vorhanden sind. Diese Eigenschaft gestattet es, den Werkstoff zu einem beliebigen Zeitpunkt, gegebenenfalls nach Zwischenlagerung, einer Aushärtung durch radikalische Polymerisation zu unterziehen.

Der auch im Rahmen der vorliegenden Erfindung eingesetzte PU-Werkstoff wird gemäss EP 0 262 488 durch Umsetzung von Hydroxygruppen enthaltenden (Meth)acrylaten mit Isocyanaten im Verhältnis von OH-Gruppen zu NCO-Gruppen von etwa 1:1 hergestellt, wobei mindestens eine der Ausgangsverbindungen trioder höherfunktionell ist, um den für die verschiedenen Anwendungen erforderlichen Vernetzungsgrad zu erreichen. Gemäss einer besonders günstigen Zusammensetzung geht man von einem Tri- oder Polyisocyanat aus, wobei es dann auch möglich ist, einen stöchiometrischen Unterschuss an Hydroxy(meth)acrylat einzusetzen und die erforderliche Vernetzung mit Wasser und/oder einem Polyol, z.B. einem aliphatischen Triol, zu erreichen, welche mit den nicht umgesetzten Isocyanatgruppen unter Harnstoff- bzw. Urethangruppenbildung reagieren. Andererseits kann man auch ein (Meth)acrylat mit drei oder mehr Hydroxygruppen mit einem Diisocyanat umsetzen. Details dieser Art der Herstellung sind aus EP 0 262 488 bekannt.

Beispiele für geeignete hydroxyfunktionelle (Meth)acrylate sind:
Bis(methacryloxy-2-hydroxypropyl)-sebacinat, Bis(methacryloxy-2-hydroxypropyl)-adipat, Bis(methacryloxy-2-hydroxypropyl)-succinat, Bis-GMA (Bisphenol-Aglycidylmethacrylat), Hydroxyethylmethacrylat (HEMA), Polyethylenglycolmethacrylat, 2-Hydroxy- und 2,3-Dihydroxypropylmethacrylat, Pentaerythritoltriacrylat.

Bevorzugte Isocyanate sind aliphatische Verbindungen, wie 3-lsocyanatomethyl-3,5,5-trimethylcyclohexylisocyanat, Trimethylhexamethylendiisocyanat sowie das Triisocyanat Tris(6-isocyanatohexyl)biuret (Desmodur® N 100 der Bayer AG).

Aus EP 0 262 488 ist ferner bekannt, dass sich die Umsetzung zwischen den Hydroxy(meth)acrylaten und Isocyanaten unter milden Bedingungen durchführen lässt. Die Temperatur beträgt vorzugsweise etwa 10 bis 60°C. Zur Beschleunigung kann ein Katalysator zugesetzt werden; geeignet sind u.a. tertiäre Amine und metallorganische Salze. Auch die Umsetzung von hydroxyfunktionellen (Meth)acrylaten ist als solche bereits bekannt. Sie dient beispielsweise zur Herstellung von Prepolymeren, welche als Bindemittel in Dentalwerkstoffen Verwendung finden können (vergl. DE-OS 2 126 419).

Der PU-Werkstoff lässt sich gemäss EP 0 262 488 auch durch ionische Copolymerisation von Hydroxy(meth)acrylaten mit einem Epoxyharz und/oder Trioxan im stöchiometrischen Verhältnis herstellen. Beispielsweise kann Bisphenol A-diglycidylether (Epikote® 828) mit Glycidylmethacrylat und/oder HEMA unter Verwendung von BF₃ als Katalysator umgesetzt werden. Ähnliche Ergebnisse liefert die Umsetzung von Glycidyl(meth)acrylat mit Trioxan und von Epoxiden mit Epoxy(meth)acrylaten. Weitere Beispiele sind die Umsetzung von Hydroxyverbindungen mit Carbonsäurederivaten, wobei mindestens eine der Ausgangsverbindungen (Meth)acrylatgruppen enthält, zu Polyestern, und die Reaktion von Allylidenen, z.B. von Diallyliden-pentaerythritol, mit Alkoholen oder Carbonsäuren. Auch bei diesen Umsetzungen bleiben die ethylenisch ungesättigten Vinylgruppen unverändert und stehen als reaktive Gruppen für die spätere radikalische Polymerisation zwecks Aushärtung zur Verfügung.

### BESCHREIBUNG DER ERFINDUNG

Überraschenderweise wurde nun gefunden, dass dieser Polyurethan-Werkstoff, der gemäss EP 0 262 488 zumeist in Form von mit silanisiertem SiO₂ armierten Klumpen hergestellt und anschliessend für die Verwendung als Füllstoff zu einem Pulver zermahlen wurde, je nach Herstellungsbedingungen, Form und Dicke mehr oder weniger stark flexibel, häufig sogar elastisch, und ohne Materialabtragung mechanisch verformbar ist. So wurde unter anderem gefunden, dass sich dieser Polyurethan-Werkstoff in Form von Folien, Streifen, Bändern, Schnüren, Strängen aber auch in Gestalt beliebiger Gegenstände, Formteile oder Gebrauchsartikel herstellen lässt, die innerhalb gewisser Grenzen - abhängig von der jeweiligen chemischen Zusammensetzung der Polyurethanmatrix und der gewählten Form der Produkte - durch Verfahren wie beispielsweise Biegen, Verdrehen, Pressen, Walzen, und dergleichen verformbar sind. Durch die Vielzahl von reaktiven Doppelbindungen, insbesondere radikalisch polymerisierbaren, ethylenisch ungesättigten Gruppen, die in chemisch gebundener Form als Teil der Polyurethanmatrix, beispielsweise einer Acrylsäure oder eines Acrylsäurederivats, in diesem Werkstoff vorliegen, ist eine Weiterverarbeitung durch eine Kombination aus mechanischer Formgebung und physikalischchemischer Härtung möglich.

Der vorliegenden Erfindung liegt nun die Aufgabe zugrunde, Wege aufzuzeigen, diesen Werkstoff in geeigneter Form bereitzustellen und daraus Formkörper beliebiger Gestalt herzustellen. Im Gegensatz zur EP 0 262 488 wird nämlich der PU-Werkstoff gemäss der vorliegenden Erfindung nach der Polyadditionsreaktion nicht als Klumpen aus dem Reaktionsbehälter entnommen und durch Mahlen auf Pulvergrösse zerkleinert, sondern es werden je nach Wunsch mehr oder weniger stark flexible, gegebenenfalls auch elastische, PU-Vorformkörper in einer vorbestimmten, für den jeweiligen Anwendungszweck gewünschten Nicht-Pulverform hergestellt, beispielsweise in der Gestalt konkreter Formteile, Gebrauchs- oder Dekorgegenstände zur unmittelbaren Nutzung als solche, oder in Form von konkreten dreidimensionalen Gebilden, vorzugsweise in der Gestalt von (Endlos-)Bändern, -Streifen, -Folien, -Strängen, -Profilen, etc. zur Weiterverarbeitung durch mechanische Verfahren, insbesondere durch solche ohne Materialabtragung, und/oder zur Härtung mittels radikalischer Polymerisation.

Unter der Bezeichnung "Vorformkörper" oder "PU-Vorformkörper" sollen nachfolgend jene Produkte konkreter gegenständlicher Form (d.h. Pulverform ist ausgeschlossen) verstanden werden, die aus dem PU-Werkstoff bestehen, der nach abgeschlossener Polyadditionsreaktion vorliegt und der die eingangs definierten Mindestgehalte an reaktiven Doppelbindungen aufweist, die in chemisch gebundener, nicht extrahierbarer Form vorliegen. Die PU-Vorformkörper können als solche bereits für bestimmte Anwendungszwecke eingesetzt werden oder aber einer nachfolgenden, insbesondere mechanischen, materialabtragenden oder nichtmaterialabtragenden Formgebung mit gleichzeitig oder anschliessend erfolgender, radikalisch induzierter Härtung unterzogen werden. Die daraus resultierenden, endgehärteten Produkte werden - ungeachtet ihrer Zusammensetzung, Form und Verwendungsmöglichkeiten - im Nachfolgenden unter der Bezeichnung "Formkörper" oder "PU-Formkörper" zusammengefasst, sofern sich aus dem Sinnzusammenhang nichts anderes ergibt.

Es ist daher eine Aufgabe der Erfindung, darzulegen, wie der reaktive Polyurethan-Werkstoff durch Verdrehen, Biegen, Pressen, Walzen, Tiefziehen oder ähnliche mechanische Einwirkungen in eine gewünschte Form gebracht und anschliessend in dieser Form durch radikalische Polymerisation über die reaktiven Doppelbindungen stabilisiert und gehärtet wird.

Erfindungsgemäss liegen die reaktiven ungesättigten Gruppen als direkte, nicht extrahierbare, chemische Bestandteile des Polyurethangerüsts vor.

Wenn die Monomere der Ausgangsmischung im stöchiometrischen Verhältnis miteinander umgesetzt werden, enthält der PU-Werkstoff praktisch keine Reste an nicht umgesetzten Monomeren, was sich daran zeigt, dass der Gehalt an Doppelbindungen durch Lösungsmittelextraktion nicht vermindert werden kann.

Durch eine gezielte Wahl der Ausgangsmonomere können sowohl die Flexibilität der Vorformkörper als auch die physikalischen Eigenschaften, insbesondere Festigkeiten, der durch radikalische Polymerisation ausgehärteten Endprodukte gesteuert werden. Je längerkettig die eingesetzten Ausgangsmonomere sind, desto elastischer ist der daraus resultierende Vorformkörper, desto geringer sind aber auch die mechanischen Festigkeitswerte der ausgehärteten Formkörper nach der radikalischen Polymerisation.

Der grosse Vorteil der vorliegenden Erfindung besteht nun darin, dass der PU-Werkstoff, beispielsweise in flächiger Form wie z.B. in Form einer Folie, eines Bandes oder Streifens, ausserordentlich vielfältig eingesetzt und am Ort der Anwendung in die gewünschte Form gebracht und ausgehärtet werden kann. So kann er beispielsweise im Bereich der Medizin dazu verwendet werden, um verletzte Gliedmassen durch teilweises oder vollständiges Umhüllen mit einer derartigen Folie und anschliessendes Aushärten durch eine, vorzugsweise lichtinduzierte, insbesondere Blaulicht- oder UV-Licht-induzierte, Härtungsreaktion innerhalb weniger Minuten ruhig zu stellen bzw. stabil zu schienen. Ebenso lassen sich damit auch Halbschalenfabrikate solcher Schienen direkt am Patienten anfertigen. Gegenüber einer herkömmlichen Gipsbandage hat dies den Vorteil, dass aufgrund der Transparenz des Materials allfällige Druckstellen oder andere unerwünschte Begleiterscheinungen oder Vorgänge von aussen sichtbar werden und dadurch frühzeitig Abhilfe dagegen erfolgen kann. Gegenüber Kunststoffsystemen, die durch Hitze verformt oder ausgehärtet werden, hat die vorliegende Erfindung den grossen Vorteil, dass keine für die Haut unverträglichen, hohen Temperaturen entstehen.

Ein weiterer Vorteil der Erfidung besteht darin, dass in vielen Anwendungfällen, insbesondere in Fällen medizinischer oder orthopädischer Anwendungen des PU-Werkstoffes in unmittelbarer Hautnähe oder mit direktem Hautkontakt (z.B. orthopädische Stützelemente, Schuheinlagen, etc.), nur solches Material verwendet werden kann, in welchem keine freien oder extrahierbaren Monomere vorliegen, um eine ansonsten mögliche Klebrigkeit des Polyurethan-Werkstoffes zu vermeiden und vor allem um zu verhindern, dass möglicherweise hautreizende oder toxische Stoffe an die Haut abgegeben werden oder eingeatmet werden.

Um für bestimmte Anwendungsfälle eine ausreichende Luftdurchlässigkeit der PU-Vorformkörper oder der endgehärteten PU-Formkörper, beispielsweise einer Gips-Ersatzbandage oder eines sonstigen Verbandsmaterial-Ersatzes, zu gewährleisten, wird der PU-Werkstoff in luftdurchlässiger Form hergestellt, wobei Verfahren zum luftdurchlässigen Schäumen oder zur nachträglichen Perforation der PU-Vorformkörper bevorzugt sind. Verfahren zur Herstellung geschäumter Kunststoffe durch z.B. Zusatz von Schäumungsmitteln oder durch Druckexpansion sowie Verfahren zur mechanischen Perforation von Kunststoffen sind im Stande der Technik bekannt.

Ein weiteres Anwendungsgebiet des PU-Werkstoffes ist erfindungsgemäss die Produktion von Gegenständen, Elementen und Heilbehelfen inklusive Knochenersatzteilen für den Bereich der Orthopädie und orthopädischen Chirurgie, sowie zur Herstellung von Dentalwerkstoffen.

Aufgrund der vorteilhaften Eigenschaften der ausgehärteten PU-Formkörper, insbesondere in Bezug auf Hautverträglichkeit, erzielbare Härte, mechanische Festigkeiten und/oder optische Eigenschaften, lässt sich der sehr einfach anzuwendende, flexible und gegebenenfalls elastische PU-Werkstoff auch für technische Zwecke im Bereich Bau und Konstruktion vorteilhaft einsetzen. Es lassen sich damit beispielsweise Rohrverbindungen, Führungen, Einfassungen, Ummantelungen, Halterungen, Schall- und Wärmeisolationen, Konstruktionselemente, Bauteile, Negativabdrücke von Gegenständen, Gussformen, und dergleichen direkt vor Ort herstellen.

Ein besonderer Vorteil des erfindungsgemässen Verfahrens zur Herstellung technischer Formteile besteht gegenüber herkömmlichen Verfahren zur Herstellung solcher oder ähnlicher Formteile unter anderem darin, dass nach der 1. Stufe der erfindungsgemässen Herstellung, d.h. nach der Herstellung des flexiblen PU-Werkstoffes bzw. PU-Vorformkörpers, alle niedermolekularen Verbindungen (Monomere) chemisch in die Polyurethanmatrix eingebunden sind und somit weder bei der Lagerung als Halbfabrikat noch bei der nachfolgenden radikalischen Aushärtung freigesetzt werden. Die Lagerung, Verarbeitung und Härtung erfolgt also emissionsfrei und kann daher auch an Orten durchgeführt werden, die nicht mit besonderen Schutzeinrichtungen wie z.B. Luftfilteranlagen ausgestattet sind. Ebenso entfällt die Zumischung und Dosierung von speziellen Härtern, wie dies bei der traditionellen Fertigung von beispielsweise Duroplastformteilen häufig üblich ist.

Als weiterer wesentlicher Vorteil der vorliegenden Erfindung ist zu erwähnen, dass sich der Polyurethan-Werkstoff auch hervorragend zur Herstellung von faserverstärkten Verbundwerkstoffen eignet. Zu diesem Zweck ist es vorteilhaft, die Fasermaterialien, insbesondere lose Fasern, Vliese oder Gewebe aus Materialien wie z.B. Glas, Mineralstoffen, Kohlenstoff oder organischen Polymeren, vor der ersten Verfahrensstufe (d.h. vor der Polyadditionsreaktion) mit den flüssigen Ausgangskomponenten zu tränken und danach die Polyaddition der Reaktionsmischung, welche das getränkte Fasermaterial enthält, durchzuführen. Auf diese Weise kann man einen flächigen, faserverstärkten Polyurethan-Werkstoff erzeugen, der nicht klebrig aber noch so flexibel ist, dass er sich in eine gewünschte Form bringen und nachfolgend zur Endfestigkeit aushärten lässt. Durch Aufeinanderlegen der flexiblen faserverstärkten Polyurethanwerkstoffe und anschliessende Hitze- und/oder Lichtpolymerisation unter Druck können Verbundformkörper hergestellt werden, deren Schichten sich chemisch miteinander verbinden.

Eine weitere Möglichkeit zur Herstellung von faserverstärkten Formkörpern, insbesondere von Mehrschicht- oder Laminatformkörpern, aus dem Polyurethan-Werkstoff besteht erfindungsgemäss darin, dass das Fasermaterial erst nach der Polyadditionsstufe zwischen zwei oder mehrere - im Regelfall flächige - Rohlinge bzw. Vor-Formkörper des Polyurethan-Werkstoffes gelegt oder eingearbeitet wird und anschliessend thermisch und/oder durch Lichtpolymerisation unter Anwendung von Druck polymerisiert wird, wobei ein ausgehärteter, faserverstärkter Verbundformkörper entsteht. Bei der radikalischen Polymerisation der verschiedenen Schichten entsteht zwischen den PU-Vorformkörpern eine homogene Verbindung, die die Verstärkungsfasern fest einschliesst. Mit dieser Methode lassen sich auch komplizierte Formen und Bauteile mit kleinen und grossen Wandstärken herstellen. Derartige Verbundformkörper lassen sich überall dort einsetzen, wo auch herkömmliche Composit-Werkstoffe (Faserverbundwerkstoffe) eingesetzt werden können, insbesondere auch im Automobil-, Eisenbahn-, Schiffs- und Flugzeugbau, wobei jedoch die Handhabung der erfindungsgemässen PU-Werkstoffe bzw. Vorformkörper gegenüber vergleichbaren herkömmlichen Composit-Kunststoffen deutlich besser ist (z.B. keine Klebrigkeit, keine Schadstoffemissionen).

Als weiterer Vorteil der vorliegenden Erfindung ist zu erwähnen, dass der bei Polymerisationsreaktionen von Kunststoffen auftretende Volumensschwund zwar auch bei den erfindungsgemässen Herstellungsverfahren auftritt, aber durch die zweistufige Reaktion - zuerst nicht-radikalische Polyaddition, dann radikalische Polymerisation - wesentlich geringer ist und sich durch Zugabe von Füllstoffen noch weiter verringern lässt. Beispielsweise kann auf diese Weise, je nach Zusammensetzung der Ausgangskomponenten und Gehalt an Füllstoffen, ein Volumensschwund von 3 % und darunter erzielt werden, gegenüber von rund 8% in vielen traditionellen Kunststoff-Polymerisationsreaktionen.

Als weiterer Vorteil der Erfindung ist zu nennen, dass der PU-Werkstoff und damit auch das ausgehärtete Endprodukt hochtransparent eingestellt werden kann und im ausgehärteten Zustand sehr hart und kratzfest ist. Der Vorteil gegenüber Glas liegt unter anderem in der besseren Handhabbarkeit und im geringeren Gewicht des Polyurethan-Werkstoffes. In gegebenenfalls faserverstärkter Form eignet sich der PU-Werkstoff daher auch hervorragend zur Herstellung von optischen Gegenständen wie Linsen, Scheinwerfergläsern, Lampenabdeckungen, Lichtkuppeln und Abdeckungen von Solaranlagen.

Des weiteren kann man aus dem PU-Werkstoff dünne Folien armiert mit EndlosKohlenstofffasern herstellen und diese als Dehnungsmesssonden einsetzen. Klebt man beispielsweise eine derartige Folie auf einen Metallträger einer Konstruktion, so reissen die Kohlenstofffasern bei einer starken Dehnung des Trägers. Da die Kohlenstofffasern elektrisch leitfähig sind, kann man anhand einer erfolgten Stromkreisunterbrechung sehr rasch eine derartige Dehnung erkennen und Gegenmassnahmen einleiten noch bevor die Konstruktion bricht.

Durch Zusätze von z.B. Aluminium- oder Silberpulver im PU-Werkstoff lassen sich elektrisch leitfähige Folien herstellen, die insbesondere als Schutz vor elektrostatischen Aufladungen an vielen Orten eingesetzt werden können.

Um die an sich ohnehin schon weitgehend gegebenen elektrischen Isolationseigenschaften des PU-Werkstoffes zu verstärken, kann man erfindungsgemäss Glimmerzusätze den Ausgangskomponenten untermischen und den daraus resultierenden PU-Werkstoff in Form von Isolierbändern herstellen. Falls nötig und sinnvoll, können diese Isolierbänder nach ihrem bestimmungsgemässen Einsatz auch gehärtet werden, um auf diese Weise dem isolierten Teil ausserdem noch mechanischen Schutz zu geben.

Daneben ist der - gegebenenfalls faserverstärkte - Polyurethan-Werkstoff natürlich auch zur Herstellung von alltäglichen Gebrauchsgegenständen, Spielzeug oder Dekorgegenständen, aber auch als Werkstoff für bildende Künstler verwendbar, wobei natürlich vor allem die elastischen Vorformkörper, die sich in jeder beliebigen Grösse herstellen und miteinander verbinden lassen, sowohl einer nicht-materialabtragenden (z.B. Pressen, Biegen, Verdrehen, etc.) als auch einer materialabtragenden Bearbeitung (z.B. Schneiden, Fräsen, Schnitzen, Schleifen, Schaben, etc.) leicht zugänglich sind.

Zur weiteren Erhöhung mechanischer Festigkeiten wie Biege-, Zug- oder Druckfestigkeiten kann der PU-Werkstoff anorganische und/oder nicht reaktive organische Füllstoffe enthalten, die vorteilhafterweise vor der Additionsreaktion dem Reaktionsgemisch zugesetzt werden. Die physikalischen Eigenschaften des PU-Werkstoffes lassen sich dadurch in weiten Grenzen variieren. Der Gehalt an inerten Füllstoffen im reaktiven PU-Werkstoff kann, bezogen auf das Gesamtgewicht des PU-Werkstoffes, zwischen 0 und 80 Gew.% liegen. Für viele technische Anwendungen günstig sind Gehalte von 20 bis 75, insbesondere von etwa 40 bis 70 Gew.%.

Eine grosse Zahl von anorganischen Verbindungen ist als Füllstoff geeignet. Beispiele sind Glaspulver, Aluminiumoxid, Siliciumdioxid wie Quarz, Sand oder Kieselsäure, Diatomeenerde, Calciumcarbonat, Ton, Talk, Bimsstein, Schlakkenmehl, Glimmer, Asbest, Aluminiumsulfat, Calciumsulfat oder Lithopone. Ebenfalls geeignet sind Molybdänsulfid, Graphit, Russ, Flugasche, Kaliumtitanat oder auch Fasern, z.B. Glasfasern, Kohlenstofffasern, oder verschiedene Kunststofffasern. Zur Erzielung extrem hoher Festigkeiten sind Glaspulver bzw. Quarzpulver sowie feinstteilige Kieselsäuren, insbesondere mikrofeine pyrogene, aber auch gefällte Kieselsäuren, besonders geeignet. Eine weitere Gruppe geeigneter Füllstoffe umfasst Vertreter wie Bariumsulfat oder Fluoride von seltenen Erdmetallen.

Um spätere Schrumpfungen oder Rissbildungen im Zuge der Endhärtung durch die radikalisch induzierte Polymerisation weitgehend zu vermeiden, wird der anorganische Füllstoff vorzugsweise oberflächlich silanisiert, um seine Einarbeitung in die organischen Materialien zu erleichtern und - bei Einsatz von Silanen mit polymerisierbaren Doppelbindungen - eine gewisse Bindung zwischen der organischen Matrix und dem anorganischen Füllstoff zu erreichen. Ein besonders bevorzugtes Silan ist γ-Methacryloxypropyltrimethoxysilan. Geeignete Silane sind ferner solche mit Hydroxy-, Amino- und Epoxidgruppen.

Es ist wichtig, bei der Herstellung des Partikel- oder Faser-armierten PU-Werkstoffes zu berücksichtigen, dass der gegebenfalls zugefügte anorganische Füllstoff oberflächlich Gruppen enthalten kann, welche an der Reaktion teilnehmen; beispielsweise weisen Kieselsäuren oberflächlich Silanolgruppen Si-OH auf, welche mit Isocyanatgruppen zu reagieren vermögen. Der Gehalt des anorganischen Füllstoffes an solchen OH-Gruppen muss daher bei Einstellung des OH:NCO-Verhältnisses der Ausgangsverbindungen berücksichtigt werden.

Geeignete inerte organische Füllstoffe sind insbesondere Acryl- und Methacrylpolymere, z.B. Polymethylmethacrylat, und Polyurethane. Diese Polymerisate werden durch Vermahlen auf die gewünschte Teilchengrösse gebracht.

Zur weiteren Erläuterung der Erfindung sind die nachfolgenden Beispiele angeführt, welche die Erfindung jedoch in keiner Weise einschränken sollen.

### BEISPIEL 1

In einem Reaktionsgefäss wird eine Lösung aus 47g Bis(methacryloxy-2-hydroxypropyl)-sebacinat, 32g Tris(6-isocyanatohexyl)-biuret und 0.1g Dibutylzinndiacetat vorgelegt und homogen gemischt. Um Lufteinschlüsse zu vermeiden, kann unter Vakuum gemischt werden.
Die Mischung wird in Plattenform oder in verschiedene Gussformen gegossen und bei 50 °C während 60 Minuten der Urethanreaktion unterzogen. Nach der DSC-Methode ergibt sich ein Doppelbindungsgehalt von 1.6 mMol/g organischer Substanz. Die entstehenden elastischen Platten, Folien oder Formkörper können, wenn gewünscht, als solche belassen oder nachfolgend zu einem beliebigen Zeitpunkt einer weiteren Bearbeitung durch z.B. Schneiden, Bohren, Walzen, Pressen, Biegen, Schleifen, Fräsen etc. unterzogen und gleichzeitig oder anschliessend durch radikalische Polymerisation der reaktiven, gebundenen Doppelbindungen durch Erwärmung auf 100 °C, während 60 Minuten zu stabilen hochfesten Formkörpern ausgehärtet werden.

### BEISPIEL 2

Zur Abwandlung von Beispiel 1 werden 51g Bis(methacryloxy-2-hydoxypropyl)-adipat, 39g Tris(6-isocyanatohexyl)-biuret und 0.1g Dibutylzinndiacetat homogenisiert. Nach der DSC-Methode ergibt sich ein Doppelbindungsanteil von 1.8 mMol/g organischer Substanz.

### BEISPIEL 3

Zur Abwandlung von Beispiel 1 werden 44g Bis(methacryloxy-2-hydroxypropyl)-succinat, 36g Tris(6-isocyanatohexyl)-biuret und 0.1g Dibutylzinndiacetat homogenisiert. Nach der DSC-Methode ergibt sich ein Doppelbindungsgehalt von 2.0 mMol/g organischer Substanz.

Die nachfolgende Tabelle 1 gibt einen Überblick über mechanische Festigkeiten von verschiedenen, nach den Beispielen 1 bis 3 hergestellten, PU-Werkstoffen nach erfolgter Heisshärtung bei 120°C und einem Druck von 6 bar:

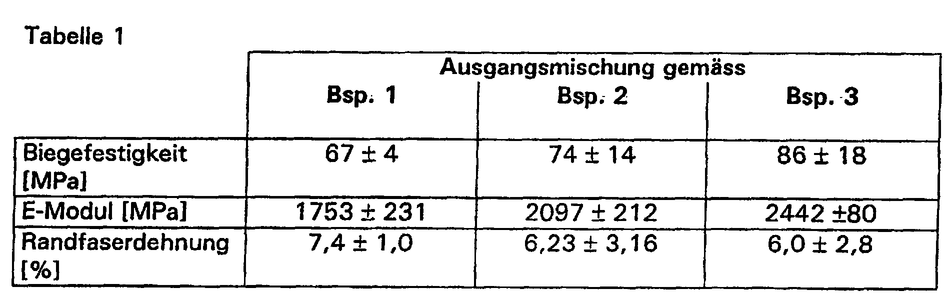

### BEISPIEL 4

Zur Abwandlung der Beispiele 1-3 wird der Mischung 1 Gew.% Di-Benzoylperoxid zugegeben und anschliessend homogenisiert. Durch den Zusatz des Katalysators verkürzt sich die nachfolgende radikalische Polymerisationszeit bei 120 °C auf 2-10 Minuten. Wahlweise kann dank des Katalysatorzusatzes der Härtungsvorgang auch bei Temperaturen weit unter 100°C, insbesondere bei Temperaturen im Bereich von 50 bis 80°C, erfolgen.

Der aus der Polyaddition hervorgegangene PU-Werkstoff wird in Form von Folien unterschiedlicher Dicke durch Pressen, Walzen, Extrudieren oder Tiefziehen hergestellt. Mehrere dieser Folien werden miteinander in Kontakt gebracht, beispielsweise in Schichten übereinandergelegt oder mit einem Haftvermittler (z.B. Benetzung mit Acrylatmonomer) aneinandergeklebt, bei Drücken von ca. 2 bis 10 bar zusammenpresst und durch Erhitzen auf vorzugsweise ca. 100 bis 150°C, insbesondere 105 bis 120°C, zu Verbund- bzw. Laminatkörpern verbunden und ausgehärtet. Dabei werden die einzelnen Schichten ohne sichtbare Grenzflächen durch chemische Reaktionen untrennbar miteinander verbunden. Durch Zusatz von Farbpigmenten zu einer oder mehrerer dieser Folien lassen sich beliebige Farbmuster oder Signalmuster erzeugen. Dieses Verfahren lässt sich grundsätzlich für alle erfindungsgemässen Vorformkörper einsetzen, die noch nicht durch radikalische Polymerisation ausgehärtet sind, sodass beliebige Verbundformkörper hergestellt werden können.

### BEISPIEL 5

Zur Abwandlung der Beispiele 1 bis 3 werden der Mischung 0.3 Gew.% DL-Campherchinon und 0.5 Gew.% Cyanoethylmethylanilin (CEMA) zugegeben; anschliessend wird homogenisiert. Die homogenisierte Masse wird in Plattenformen gegossen, zu Platten gepresst oder zu Folien extrudiert oder tiefgezogen, wobei Schichtdicken von 0.1 bis 5 mm eingestellt werden. Nach einer Reaktionszeit von 60 Minuten bei 50°C werden die glasklaren, biegsamen Kunststofffolien bzw. -platten entnommen.
a) Aus den Platten oder Folien mit einer Schichtdicke von 0,1 - 1 mm werden Fingernagel-Formen ausgestanzt, auf die echten Fingernägel einer Testperson aufgelegt oder mit Hilfe eines Haftvermittlers (Klebers) aufgeklebt, gegebenenfalls mit einer Fingernagelschere oder einer sonstigen Schere exakt an die Fingerform angepasst und mit Hilfe eines Lichtpolymerisationsgerätes mit einem Lichtspektrum von 400-500 nm in 90 Sekunden gehärtet. Auf analoge Art und Weise lassen sich auch andere Gegenstände, beispielsweise orthopädische Schuheinlagen, sonstige orthopädische Stützelemente, Dekorgegenstände, etc. herstellen.
b) Die 1 mm dicke Folie wird in Streifen zu ca. 100 mm Breite und ca. 200 bis 500 mm Länge geschnitten. Diese Streifen werden um Rohrenden von jeweils zwei aneinanderstossenden Kunststoff- oder Metallrohren so gewickelt, dass sie eine beidseitige (links- und rechtsseitige) Überlappung der Rohrenden von mindestens 40 mm gewährleisteten und dem Umfang des Rohres genau entsprechen oder diesen geringfügig übertreffen. Die in dieser Position fixierten Streifen werden anschliessend durch äussere Bestrahlung mittels einer Blaulichtoder UV-Lampe oder durch gleichzeitiges Erwärmen und Licht-Bestrahlen in einem Blaulicht/UV-Ofen innerhalb von ca. 1 bis 10 Minuten gehärtet. Auf diese Weise entstehen harte, stabile Manschetten, wobei im Falle der gleichzeitigen Erwärmung und Licht-Bestrahlung die Manschetten an den Rohrenden ausserdem einen wasserdichten Verbund ergeben.
c) Die 5 mm dicke Folie wird in mehrere Teile zerteilt und mittels texturierter Walzen und Pressen mit verschiedenen Oberflächenmustern bearbeitet. Die entstandenen Reliefs werden durch gleichzeitige Erhitzung auf Temperaturen von 100 bis 120°C und/oder durch UV- oder Blaulicht-Bestrahlung in ihrer Gestalt fixiert und ausgehärtet. Dekor- oder sonstige Gegenstände, die auf diese oder ähnliche Weise hergestellt werden, können sowohl vor als auch nach der Härtung durch z.B. Bemalen, Schleifen, Fräsen, Ritzen, Ätzen, etc. weiterbearbeitet werden.

### BEISPIEL 6

In Abwandlung der Beispiele 1 und 5 wird die Mischung mit 20 Gew.% silanisiertem Silicumdioxid mit einer mittleren Primärteilchengrösse von 40 nm (AEROSIL® OX-50 der Fa. Degussa) versetzt und möglichst homogen vermischt.
a) Thermische Härtung (wie in Bsp.1): Die pastöse, aber noch fliessfähige Masse wird anschliessend in verschiedene Gussformen gegossen und in einem Wärmeschrank bei 50°C während 1 h der Urethanreaktion unterzogen. Die entstehenden Formkörper (in diesem Fall einfache geometrische Formen wie Würfel, Quader, Kugeln, Tetraeder, Zylinder, Sterne, Tierfiguren und einfache Testprofile) sind trotz des hohen Füllstoffanteils noch elastisch. Diese Formkörper können, wenn gewünscht, als solche bereits belassen oder nachfolgend zu einem beliebigen Zeitpunkt einer weiteren Bearbeitung durch z.B. Pressen, Walzen, Biegen, Schleifen, Schneiden, Bohren, Fräsen, Schaben, etc., unterzogen und gleichzeitig oder anschliessend durch radikalische Polymerisation, z.B. 60 Minuten Heisshärtung bei 100 °C, zu stabilen, hochfesten Formkörpern ausgehärtet werden. Die Heisshärtung kann sowohl in einem herkömmlichen (Heissluft-)Ofen als auch mit einem Mikrowellengerät bei Wellenlängen von ca. 1 - 1000 mm erfolgen.
b) Alternativ oder ergänzend dazu kann auch eine Lichthärtung durch Bestrahlung mit einer UV- oder Blaulicht Lichtquelle vorgenommen werden, sofern der Ausgangsmischung, wie in Beispiel 5 beschrieben, Photokatalysator zugesetzt wird.

Selbstverständlich können sowohl die durch nicht-radikalische Polyaddition erzeugten (Vor-)Formkörper als auch die endgehärteten Formkörper mit Farben und Lacken bemalt oder verziert werden.

### BEISPIEL 7

In Abwandlung der Beispiele 1-5 werden die angegebenen Mischungen mit 5 bis 80 Gew.% Glasfasern einer Länge von 0.2-2 mm (Kurzschnittfasern) und einer Dicke von 0.1-1 mm vermischt und analog Beispiel1 weiterverarbeitet. Die gemäss diesem Beispiel hergestellten faserarmierten Folien, Bänder oder Formkörper unterschiedlicher Grössen und Dicken zeichnen sich nach der Polyaddition durch eine hohe Zugfestigkeit bei gleichzeitiger Elatizität aus. Nach der radikalischen Polymerisation erhält man Produkte mit hohen Werten für mechanisch-physikalische Parameter wie z.B. Druckfestigkeit, Biegefestigkeit, Elastizitätsmodul etc. (siehe Tabelle 2).

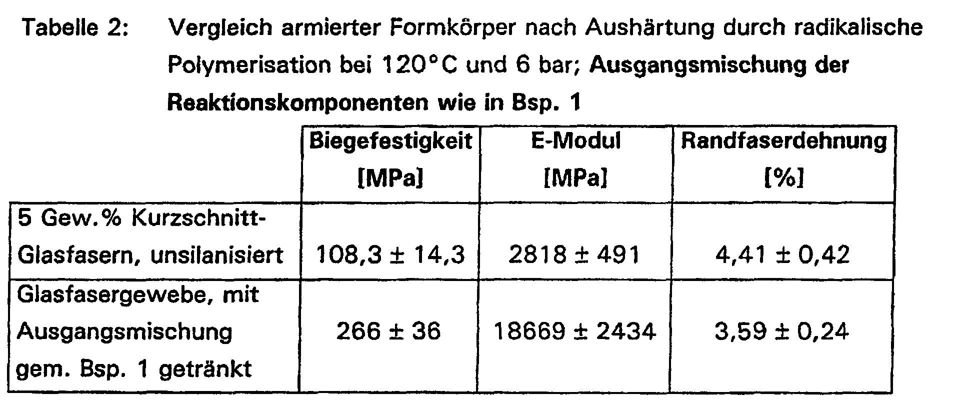

Mit der Einarbeitung von Glasfasern und anderen Füllstoffen vermindert sich bei der radikalischen Polymerisation ausserdem die ohnehin schon geringe Polymerisationsschrumpfung (z.B. ca.3% in den Beispielen 1-5) auf einen Bruchteil davon.

### BEISPIEL 8

In Abwandlung von Beispiel 5 wird die jeweilige Mischung zusammen mit 20 Gew.% (AEROSIL® OX-50 der Fa. Degussa) vermischt und in einem Schneckenextruder auf 50°C erwärmt und homogenisiert. Anstelle von Campherchinon und CEMA werden 0,5 Gew.% 2,4,6-Trimethylenbenzoyldiphenylphosphinoxid als Lichtkatalysator zugesetzt.

Die Masse wird bei geringem Druck durch eine Flachdüse mit einer Öffnung von 5 mm Höhe auf ein Endlosband gefördert, gegebenenfalls anschliessend auf eine Dicke von 1-1,5 mm gewalzt, und danach in einer Weiterverarbeitungszone bei einer Temperatur von 50 °C über einen Zeitraum von 1 bis 2 Stunden der Urethanreaktion unterzogen. Der Doppelbindungsanteil der daraus resultierenden faserarmierten PU-Platten, Streifen bzw. Folien und Gewebe beträgt 1,6 bis 2,0 mMol pro g organischer Substanz.

Die gemäss diesem Beispiel hergestellten faserarmierten Folien, Streifen oder Bänder unterschiedlicher Grössen und Dicken zeichnen sich durch hohe Elastizität aus. Sie können durch Verdrehen, Verdrillen und/oder Biegen in verschiedene phantasievoll-dekorative oder nützliche Formen gebracht und anschliessend durch Bestrahlung bei einer Wellenlänge von 300-500 nm, beispielsweise mit einem Lichtgerät einer Lichtstärke von 18000 Lux, innert 1 bis 5 Minuten gehärtet werden. Die Aushärtung kann durch gleichzeitige oder nachfolgende Erwärmung auf ca. 50 bis 120°C erheblich beschleunigt oder verbessert werden. Die dabei erhaltenen Gegenstände zeichnen sich durch hohe Stossbelastbarkeit und Bruchsicherheit aus.

### BEISPIEL 9

In Abwandlung der Beispiele 1-5 wird ein Glasgewebe mit den homogenisierten Mischungen imprägniert und unter Druck in einer dünnen Schicht ausgepresst.
Nach der Polyaddition erhält man ein klebfreies, gut verformbares, imprägniertes Gewebe. Durch Aufeinanderschichten zweier oder mehrerer Lagen dieses Gewebes, gegebenenfalls nach Benetzung mit kurzkettigem Acrylat- oder Methacrylat-Monomer, entstehen durch die anschliessende radikalische thermische und/oder Lichtpolymerisation unter Druck hochfeste Formkörper oder Platten, die beispielsweise als Leiterplatten für die Elektronikindustrie einsetzbar sind. Wenn extrem hohe Festigkeiten erwünscht sind, kann man insbesondere silanisierte Glasfasern einsetzen.
Durch Verwendung von unidirektionalen Fasersträngen anstelle von Faservlies oder Fasergewebe und versetztes Aufeinanderlegen der daraus hergestellten imprägnierten Schichten kann der Verbund- bzw. Laminatkörper speziell auf gewünschte Kraftverläufe hin optimiert werden.

### BEISPIEL 10

Vergleich der Aushärtungszeiten bei verschiedenen Härtungsverfahren des Polyurethan-Werkstoffes:
a) Ohne Katalysatorzusatz ist die radikalische Polymerisation der Vorformkörper bei Temperaturen von vorzugsweise ca. 100 bis 150°C durchzuführen. Die Reaktionszeit beträgt dabei ca. 10 (bei 150°C) bis 60 (bei 100°C) Minuten.
b) Hitzehärtung von Acrylat- und Methacrylat-Polyurethanen unter Zusatz von geeigneten Katalysatoren

**Tabelle 3:**

| Zugesetzter Katalysator | Temperatur | | |
|---|---|---|---|
| | 80 °C | 100°C | 120°C |
| Di-Benzoyiperoxid | 60-120 min | 5-15 min | 2-10 min |
| Tert. Butylperoctoat | 30-100 min | 5-10 min | 1-3 min |
| Benzpinakol | 24-72 h | 1-5 h | 3-10 min |

c) Lichthärtung von Acrylat- und Methacrylat-Polyurethanen unter Zusatz von geeigneten Katalysatoren

**Tabelle 4:**

| Lichtleistung: | 450 mW/cm2 | 18000 Lux | 18000 Lux |
|---|---|---|---|
| Spektrum: | 400-500 nm | 400-500 nm | 300-500 nm |
| Campherchinon | 20-120 sec | 4-10 min | 3-5 min |
| 2,4,6-Trimethylenbenzoyldiphenylphosphinoxid | n.b. | 2-15 min | 1-5 min |
| Benzildimethylketal (Irgacure® 651) | n.b. | n.b. | 3-10 min |
| n.b. = nicht bestimmt | | | |

Die Aushärtung mittels Licht ist stark abhängig von der Schichtdicke des Polyurethan-Werkstoffes, der Einfärbung und der gegebenenfalls vorhandenen Menge an Fasermaterialien und/oder Füllstoffen. Die Lichthärtung kann bezüglich der Durchhärtungstiefe und Oberflächenhärte mit Aminzusätzen (z.B. Triethanolamin) beschleunigt bzw. verbessert werden.

Durch eine gleichzeitige oder nachträgliche Hitzebehandlung bei Temperaturen von ca. 100-120°C über eine Dauer von 5-10 Minuten kann die Härte bzw. die physikalische Festikeit der Formkörper nochmals signifikant gesteigert werden.

Sowohl zur Lichthärtung als auch zur Heisshärtung werden Katalysatoren üblicherweise in einer Menge von bis zu 5 Gew.%, insbesondere von ca. 0,1 bis 1 Gew.%, eingesetzt. Im vorliegenden Beispiel beträgt der Katalysatorgehalt in den Fällen b) und c) annähernd 1 Gew.%.

### BEISPIEL 11

Ein 10 Meter langes Seil aus PU-Werkstoff hergestellt nach Beispiel 5, mit einem Durchmesser von 1 cm, wird spiralförmig verdrillt und in eine annähernd S-förmige Gestalt gebracht. In dieser Gestalt wird der Vorformkörper mittels Lichtpolymerisation 10 Minuten lang gehärtet. Der glasklare Formkörper wird anschliessend mit einem Ende mit einer nach allen Seiten hin abgedunkelten klaren oder gefärbten Glühbirne oder Halogenlampe in direkte Verbindung gebracht; diese Kombination wird in einem dunklen Raum plaziert. Durch das Einschalten der Lampe, deren Licht nicht direkt den Raum erhellen kann, wird das Licht über den PU-Formkörper transportiert und im Raum verteilt. Auf ähnliche Weise lassen sich mit den verschiedenen PU-Werkstoffen und den daraus herstellbaren Formkörpern phantasievolle Lichtdekors und Lichteffekte erzielen.

### BEISPIEL 12

Um besonders dekorative Formkörper zu erzeugen, können der Ausgangsmischung der Komponenten vor der Polyadditionsreaktion Farbpigmente, vorzugsweise in einer Konzentration von 0,1 bis 5 Gew.% zugesetzt werden, beispielsweise anorganische Oxide wie Eisenoxid oder Titandioxid.

## Patentansprüche

1. Verfahren zur Herstellung von Formkörpern auf der Basis eines Polyurethan-Werkstoffes, worin
a) eine, vorzugsweise fliessfähige, Mischung von Ausgangskomponenten hergestellt wird, die einerseits Isocyanat und andererseits Hydroxygruppen enthaltende Monomere mit reaktiven Doppelbindungen, vorzugsweise Hydroxygruppen enthaltendes Acrylat oder Methacrylat, enthält, wobei die Hydroxygruppen enthaltenden Monomere in einem stöchiometrischem Verhältnis oder einem stöchiometrischen Unterschuss zu Isocyanat eingesetzt werden; und
b) die Mischung einer nicht-radikalisch ausgelösten Polyadditionsreaktion unterzogen wird wobei ein radikalisch polymerisierbarer Vorformkörper erzeugt wird, der einen - mittels DSC-Methode bestimmbaren - Gehalt an nicht-extrahierbaren reaktiven Doppelbindungen von mindestens 0.5 mMol/g aufweist und frei ist von extrahierbaren Monomeren mit reaktiven Doppelbindungen;
**dadurch gekennzeichnet, dass** die Mischung vor oder während der Polyadditionsreaktion nach an sich bekannten Methoden der Kunststofftechnik, insbesondere durch Giessen, Pressen, Walzen, Extrudieren, Tiefziehen oder Schäumen, in eine gewünschte Form gebracht wird und der daraus resultierende flexible, gegebenenfalls elastische, Vorformkörper zu einem beliebigen Zeitpunkt, vorzugsweise nach einer weiteren, insbesondere nicht materialabtragenden, Formgebung durch radikalisch ausgelöste Polymerisation der reaktiven Doppelbindungen zu einem strukturfesten Formkörper ausgehärtet wird.

2. Verfahren nach Anspruch 1, **dadurch gekennzeichnet, dass** die Mischung der Ausgangskomponenten Isocyanat und Hydroxylgruppen enthaltendes (Meth)acrylat in einem Verhältnis von OH-Gruppen zu NCO-Gruppen von etwa 1:1, enthält und wenigstens eine der Ausgangskomponenten zumindest bi-funktionell, vorzugsweise trioder polyfunktionell ist.

3. Verfahren nach einem der Ansprüche 1 oder 2, **dadurch gekennzeichnet, dass** die Härtung durch radikalisch ausgelöste Polymerisation im wesentlichen ohne Abgabe von Emissionen erfolgt.

4. Verfahren nach einem der Ansprüche 1 bis 3, **dadurch gekennzeichnet, dass** der Vorformkörper in Gestalt einer Folie, eines Streifens, eines Bandes oder einer beliebigen Gussform, gegebenenfalls in geschäumter Form, hergestellt und anschliessend zumindest einer weiteren, vorzugsweise nicht-materialabtragenden, Formgebung durch beispielsweise Biegen, Verdrehen, Pressen, Walzen oder Tiefziehen unterzogen wird.

5. Verfahren nach einem der Ansprüche 1 bis 4, **dadurch gekennzeichnet, dass** den Ausgangskomponenten mindestens einer der nachfolgenden Bestandteile zugesetzt wird: ein Füllstoff, ein Fasermaterial, ein Farbpigment.

6. Verfahren nach einem der Ansprüche 1 bis 5, **dadurch gekennzeichnet, dass** eine Aushärtung des Vorformkörpers durch radikalische Polymerisation der freien Doppelbindungen unter Anwendung von erhöhtem Druck und/oder erhöhter Temperatur und/oder Bestrahlung mit Mikrowellen oder energiereicher, insbesondere ionisierender, Strahlung erfolgt.

7. Verfahren nach einem der Ansprüche 1 bis 6, **dadurch gekennzeichnet, dass** der Mischung der Ausgangskomponenten mindestens ein zur Auslösung und/oder Beschleunigung einer radikalischen Polymerisation der reaktiven Doppelbindungen geeigneter Katalysator, insbesondere ein Heisshärtungs- oder Photokatalysator, in einer Menge von bis zu 5 Gew.%, vorzugsweise von 0,1 bis 1 Gew.%, zugesetzt wird.

8. Verfahren nach einem der Ansprüche 1 bis 7, **dadurch gekennzeichnet, dass** zwei oder mehr Vorformkörper, insbesondere in Form von Folien, Bändern, Streifen oder Platten, miteinander in Kontakt gebracht, vorzugsweise schichtweise übereinandergelegt oder mittels Haftvermittler aneinandergeklebt, werden und unter Anwendung von erhöhtem Druck und erhöhter Temperatur miteinander zu Verbundoder Laminatformkörpern beliebiger Schichtdicke verbunden und, gegebenenfalls mit Lichtunterstützung, ausgehärtet werden.

9. Verfahren nach Anspruch 8, **dadurch gekennzeichnet, dass** vor der Aushärtung durch radikalische Polymerisation Fasermaterial, insbesondere in Form von Fasergeweben oder Faservliesen, zwischen die Vorformkörper eingebracht wird.

10. Verfahren nach einem der Ansprüche 5 bis 9, **dadurch gekennzeichnet, dass** den Ausgangskomponenten ein Füllstoff in einer Konzentration von maximal 80 Gew.%, vorzugsweise von 20 bis 75, insbesondere von etwa 40 bis 70 Gew.% zugesetzt wird.

11. Verfahren nach einem der Ansprüche 5 bis 8, **dadurch gekennzeichnet, dass** das Fasermaterial in Form von unidirektionalen Fasersträngen, Fasergewebe oder Faservlies vorliegt und vorzugsweise Glasfasern, Kohlenstofffasern, Aramidfasern, Polyethylenfasern, Zellulosefasern, und/oder andere geeignete Kunststofffasern enthält.

12. Verfahren nach Anspruch 11, **dadurch gekennzeichnet, dass** das Fasermaterial vor der Polyadditionsreaktion mit einer Mischung der Ausgangskomponenten getränkt und danach in Platten- oder Folienform gepresst und der Polyadditionsreaktion unterzogen wird.

13. Verfahren nach Anspruch 6, **dadurch gekennzeichnet, dass** die Härtung des Vorformkörpers bei einem Druck von 2 bis 10 bar und/oder bei einer Temperatur von 80 bis 150°C und/oder bei einer Bestrahlung mit Licht einer Wellenlänge von 300 bis 500 nm oder mittels Mikrowellen einer Wellenlänge von 1 bis 1000 mm erfolgt.

14. Formkörper auf der Basis eines durch nicht-radikalisch ausgelöste Polyadditionsreaktion hergestellten Vorformkörpers mit einer Polyurethanmatrix aus Isocyanat und Hydroxygruppen enthaltenden Monomeren mit reaktiven Doppelbindungen, insbesondere Hydroxygruppen enthaltendem (Meth)acrylat, und gegebenenfalls weiteren Zusätzen, in welcher die Hydroxygruppen enthaltenden Monomere in einem stöchiometrischem oder unterstöchiometrischen Verhältnis zum Isocyanat vorliegen und der Vorformkörper einen - mittels DSC-Methode bestimmbaren - Gehalt an nicht extrahierbaren reaktiven Doppelbindungen von mindestens 0.5 mMol/g aufweist und frei ist von extrahierbaren Monomeren mit reaktiven Doppelbindungen, **dadurch gekennzeichnet, dass** der Formkörper in Form eines durch radikalische Polymerisation der reaktiven Doppelbindungen ausgehärteten, strukturfesten, gegebenenfalls geschäumten, Gegenstands oder Formteils vorliegt.

15. Formkörper nach Anspruch 14, **dadurch gekennzeichnet, dass** vor der Polyadditionsreaktion lsocyanat und Hydroxylgruppen enthaltendes (Meth)acrylat als Ausgangsverbindungen in einem Verhältnis von OH-Gruppen zu NCO-Gruppen von etwa 1:1, vorliegen und wenigstens eine der Ausgangsverbindungen zumindest bi-funktionell, vorzugsweise tri- oder polyfunktionell ist.

16. Formkörper nach einem der Ansprüche 14 oder 15, **dadurch gekennzeichnet, dass** er farblos, durchscheinend, glasklar, und/oder luftdurchlässig ist.

17. Formkörper nach einem der Ansprüche 14 bis 16, **dadurch gekennzeichnet, dass** er mindestens einen der nachfolgenden Zusätze: Füllstoff, Fasermaterial, Farbpigment, enthält und/oder eine Oberflächenbehandlung, insbesondere eine Beschichtung, Färbung, Bemalung und/oder eine Textur aufweist.

18. Formkörper nach einem der Ansprüche 14 bis 17, **dadurch gekennzeichnet, dass** er als gehärteter Verbund- oder Laminatformkörper, gebildet aus mindestens zwei härtbaren Vorformkörpern vorliegt.

19. Formkörper auf Polyurethanbasis, erhältlich nach einem Verfahren gemäss einem der Ansprüche 1 bis 13.

20. Verwendung eines flexiblen, gegebenenfalls elastischen, Vorformkörpers mit einer durch nicht-radikalisch ausgelöste Polyadditionsreaktion hergestellten Polyurethanmatrixaus Isocyanat und Hydroxygruppen enthaltenden Monomeren mit reaktiven Doppelbindungen, insbesondere Hydroxygruppen enthaltendem (Meth)acrylat, und gegebenenfalls weiteren Zusätzen, welcher einen - mittels DSC-Methode bestimmbaren - Gehalt an nicht extrahierbaren reaktiven Doppelbindungen von mindestens 0.5 mMol/g aufweist und frei ist von extrahierbaren Monomeren mit reaktiven Doppelbindungen, zur Herstellung eines strukturfesten Gegenstands oder Formteils durch Aushärtung des Vorformkörpers via radikalische, vorzugsweise emissionsfreie, Polymerisation nach oder während einer weiteren, insbesondere nicht materialabtragenden, mechanischen Formgebung des Vorformkörpers.

21. Verwendung nach Anspruch 20, worin die weitere Formgebung und gleichzeitige oder nachfolgende Aushärtung des Vorformkörpers direkt am Einsatzort erfolgt.

22. Verwendung nach Anspruch 20 oder 21, zur Herstellung von technischen Formteilen, Konstruktions- und Stützelementen, Lichtleitern, Werkzeugbestandteilen, Abdeckungen und Schutzfolien, elektrischen, thermischen oder akustischen Isolationselementen, Spielzeug, Gebrauchs-, Kunst- oder Dekorgegenständen.

23. Verwendung eines Formkörpers gemäss einem der Ansprüche 14 bis 19, zur Herstellung von technischen Formteilen, Konstruktions- und Stützelementen, Lichtleitern, Werkzeugbestandteilen, Abdeckungen und Schutzfolien, elektrischen, thermischen oder akustischen Isolationselementen, Spielzeug-, Gebrauchs-, Kunstoder Dekorartikeln.

24. Verwendung gemäss einem der Ansprüche 20-23, zum Einsatz in der Medizin, im Dentalwesen, im Bau- und Konstruktionswesen, in der Befestigungstechnik, Isolierund Verpackungstechnik, im Fahrzeugbau, in der Messtechnik, im Haushalt, sowie im Bereich der bildenden Kunst.

## Claims

1. Method for the production of moulded bodies on the basis of a polyurethane material where
a) a preferably flowable mixture of starting components is prepared which contains, on one hand isocyanate and on the other hand monomers with reactive double bonds and containing hydroxyl groups, preferably acrylate or methacrylate containing hydroxyl groups, where the monomers containing hydroxyl groups are used in a stoichiometric ratio or in less than the stoichiometric amount relative to isocyanate; and
b) the mixture is subjected to a nonradical-triggered polyaddition reaction generating a radical-polymerisable preform having a content of nonextractable, reactive double bonds - that can be determined by DSC - of at least 0.5 mmole/g and is free of extractable monomers with reactive double bonds;
**characterised in that** the mixture before or during the polyaddition reaction is brought to a desired form by methods of plastics engineering known per se, in particular by casting, pressing, rolling, extruding, deep-drawing, or foaming, and the resulting flexible or, where applicable, elastic preform is definitely cured to a structurally rigid moulded body at any time, preferably after a further forming, and particularly without the removal of material, by radical-triggered polymerisation of the reactive double bonds.

2. Method according to claim 1, **characterised in that** the mixture of starting components contains isocyanate and (meth)acrylate containing hydroxyl groups in a ratio of about 1 : 1 between the OH and NCO groups, and that at least one of the starting components is at least bifunctional, preferably tri or polyfunctional.

3. Method according to one of the claims 1 or 2, **characterised in that** the curing by radical-triggered polymerisation occurs essentially without emissions.

4. Method according to one of the claims 1 to 3, **characterised in that** the preform is produced in the shape of a film, tape, ribbon or any moulded form, or where applicable in a foamed form, and is subsequently subjected to at least one further forming process, preferably without the removal of material, for instance by bending, twisting, pressing, rolling, or deep-drawing.

5. Method according to one of the claims 1 to 4, **characterised in that** to the starting components at least one of the following components is added: a filler, a fibre material, a coloured pigment.

6. Method according to one of the claims 1 to 5, **characterised in that** a definite curing of the preform occurs by radical polymerisation of the free double bonds while applying elevated pressure and/or elevated temperature and/or irradiation with microwaves or energy-rich radiation, particularly ionising radiation.

7. Method according to one of the claims 1 to 6, **characterised in that** to the mixture of starting components at least one catalyst adapted to trigger and/or accelerate a radical-type polymerisation of the reactive double bonds is added, particularly a hot-curing or photocatalyst, in an amount of up to 5 % by weight, preferably 0.1 to 1 % by weight.

8. Method according to one of the claims 1 to 7, **characterised in that** two or more preforms, particularly in the form of films, tapes, ribbons, or plates, which are brought in mutual contact, preferably piled up as layers or glued together with the aid of an adhesion promoter, are bonded together while applying elevated pressure and elevated temperature to yield composites or laminates of any desired layer thickness, and are definitely cured, where appropriate with the aid of light.

9. Method according to claim 8, **characterised in that** fibre material, particularly in the form of woven or nonwoven fibre fabric, is inserted between the preforms prior to definite curing by radical polymerisation.

10. Method according to one of the claims 5 to 9, **characterised in that** to the starting components a filler is added in a concentration of at most 80 % by weight, preferably of 20 to 75 and particularly of about 40 to 70 % by weight.

11. Method according to one of the claims 5 to 8, **characterised in that** the fibre material is present in the form of unidirectional fibre strands, woven or nonwoven fibre fabric and preferably contains glass fibres, carbon fibres, aramide fibres, polyethylene fibres, cellulose fibres, and/or other suitable plastic fibres.

12. Method according to claim 11, **characterised in that** the fibre material prior to the polyaddition reaction is impregnated with a mixture of the starting components, and then moulded in the form of plates or film and subjected to the polyaddition reaction.

13. Method according to claim 6, **characterised in that** the curing of the preform occurs at a pressure of 2 to 10 bar and/or a temperature of 80 to 150 °C and/or under irradition with light having a wavelength of 300 to 500 nm or with microwaves having a wavelength of 1 to 1000 mm.

14. Moulded body on the basis of a preform produced by a nonradical-triggered polyaddition reaction, with a polyurethane matrix from isocyanate and monomers with reactive double bonds containing hydroxyl groups, particularly (meth)acrylate containing hydroxyl groups and, where appropriate, from further additives, where the monomers containing hydroxyl groups are present in a stoichiometric or substoichiometric ratio relative to the isocyanate and the preform has a content of nonextractable, reactive double bonds - that can be determined by DSC - of at least 0.5 mmole/g and is free of extractable monomers with reactive double bonds, **characterised in that** the preform is present in the form of a structurally rigid object or formed part, foamed where applicable, that was definitely cured by radical polymerisation of the reactive double bonds.

15. Moulded body according to claim 14, **characterised in that** prior to the polyaddition reaction, isocyanate and (meth)acrylate containing hydroxyl groups are present as the starting compounds in a ratio of about 1 : 1 of the OH and NCO groups, and that at least one of the starting compounds is at least bifunctional, preferably tri or polyfunctional.

16. Moulded body according to one of the claims 14 to 15, **characterised in that** it is colourless, translucent, crystal clear, and/or permeable to air.

17. Moulded body according to one of the claims 14 to 16, **characterised in that** it contains at least one of the following additives: filler, fibre material, coloured pigment, and/or exhibits a surface treatment, particularly a coating, coloration, painting and/or texture.

18. Moulded body according to one of the claims 14 to 17, **characterised in that** it is present as a cured composite or laminate formed from at least two curable preforms.

19. Polyurethane-based moulded body that can be obtained by a method according to one of the claims 1 to 13.

20. Use of a flexible, where appropriate elastic preform with a polyurethane matrix produced by a nonradical-triggered polyaddition reaction from isocyanate and monomers with reactive double bonds containing hydroxyl groups, particularly (meth)acrylate containing hydroxyl groups, and where appropriate further additives, which has a content of nonextractable, reactive double bonds - that can be determined by DSC - of at least 0.5 mmole/g and is free of extractable monomers with reactive double bonds, for the production of a structurally rigid object or formed part by definite curing of the preform via radical polymerisation, preferably free of emissions, after or during a further mechanical forming of the preform, particularly without the removal of material.

21. Use according to claim 20, where the further forming and simultaneous or subsequent definite curing of the preform occur directly at the point of use.

22. Use according to claim 20 or 21 for the production of technical formed parts, design and support elements, optical wave guides, tool components, covers and protective films, electrical, thermal or acoustic insulating elements, toys, utensils, art objects, or decorative objects.

23. Use of a moulded body according to one of the claims 14 to 19 for the production of technical formed parts, design and support elements, optical wave guides, tool components, covers and protective films, electrical, thermal or acoustic insulating elements, toys, utensils, art objects, or decorative objects.

24. Use according to one of the claims 20 to 23, for applications in medicine, dentistry, civil and mechanical engineering, fastening technology, insulating and packaging technology, the automotive industry, measuring technology, households, as well as in fine art.

## Revendications

1. Procédé de fabrication d'un corps formé à base d'un polyuréthanne, dans lequel
a) un mélange, de préférence fluide, de composants de départ est préparé, contenant, d'une part, un isocyanate et, d'autre part, des monomères avec des doubles liaisons réactives contenant des groupes hydroxy, de préférence un acrylate ou un méthacrylate contenant des groupes hydroxy, les monomères contenant des groupes hydroxy étant utilisés, par rapport à l'isocyanate, dans une proportion stoechiométrique ou dans une proportion inférieure à celle-ci ; et
b) le mélange est soumis à une réaction de polyaddition activée par un processus non radicalaire, pour obtenir une préforme qui est susceptible d'être polymérisée par un processus radicalaire, qui a une teneur en doubles liaisons réactives non susceptibles d'être extraites - déterminée par calorimétrie différentielle programmée - d'au moins 0,5 mmoles / g et qui est exempte de monomères avec des doubles liaisons réactives susceptibles d'être extraits ;
**caractérisé en ce que** le mélange est mis sous la forme souhaitée avant ou pendant la réaction de polyaddition, par des procédés connus en soi dans le domaine de la technologie des matière plastiques et, en particulier, par coulée, par compression, par calandrage, par extrusion, par emboutissage profond ou par moulage avec expansion et que la préforme obtenue, qui est flexible et, le cas échéant, élastique, est ensuite durcie à un moment choisi librement, de préférence après un formage additionnel et en particulier n'entraînant pas de perte de matériau, par une polymérisation, activée par un processus radicalaire, des doubles liaisons réactives, pour obtenir un corps formé ayant une structure rigide.

2. Procédé selon la revendication 1, **caractérisé en ce que** le mélange des composants de départ, que sont l'isocyanate et le méthacrylate contenant des groupes hydroxy, présente un rapport des groupes OH sur les groupes NCO d'environ 1 : 1 et **en ce qu'**au moins un des composants de départ est au moins bifonctionnel et, de préférence, trifonctionnel ou polyfonctionnel.

3. Procédé selon la revendications 1 ou la revendication 2, **caractérisé en ce que** le durcissement par une polymérisation activée par un processus radicalaire se fait sensiblement sans le dégagement d'émissions.

4. Procédé selon l'une des revendications 1 à 3, **caractérisé en ce que** la préforme est constituée par une feuille, un ruban, une bande ou une autre forme moulée quelconque, le cas échéant expansée, et qu'elle est ensuite soumise au moins à un formage additionnel, de préférence n'entraînant pas de perte de matériau, comme par exemple à un pliage, une torsion, une compression, un calandrage ou un emboutissage profond.

5. Procédé selon l'une des revendications 1 à 4, **caractérisé en ce qu'**aux composants de départ, on ajoute au moins un des ingrédients suivants : charge, matériau fibreux, pigment coloré.

6. Procédé selon l'une des revendications 1 à 5, **caractérisé en ce que** l'on durcit les préformes par une polymérisation radicalaire des doubles liaisons libres, en faisant appel à une pression augmentée et / ou à une température augmentée et / ou à un rayonnement de micro-ondes ou à des radiations à haute énergie et, en particulier, à des radiations ionisantes.

7. Procédé selon l'une des revendications 1 à 6, **caractérisé en ce que** le mélange des composants de départ contient au moins un catalyseur approprié, pour déclencher et / ou accélérer une polymérisation radicalaire des doubles liaisons réactives, en particulier un catalyseur de durcissement à chaud ou un photocatalyseur, dans une proportion allant jusqu'à 5 % en poids et, de préférence de 0,1 à 1 % en poids.

8. Procédé selon l'une des revendications 1 à 7, **caractérisé en ce que** deux préformes ou davantage, en particulier constituées par des feuilles, des bandes, des rubans ou des plaques, sont mises mutuellement en contact, de préférence superposées en couches ou collées l'une contre l'autre par un adhésif, puis compactées ensemble en utilisant une pression et une température augmentées, le cas échéant avec en plus une exposition à une lumière, pour obtenir des corps liés ou stratifiés ayant l'épaisseur souhaitée.

9. Procédé selon la revendication 8, **caractérisé en ce que**, avant le durcissement par polymérisation radicalaire, un matériau fibreux, en particulier sous la forme d'un tissu tissé ou d'un tissu non tissé, est placé entre les préformes.

10. Procédé selon l'une des revendications 5 à 9, **caractérisé en ce qu'**une charge est ajoutée aux composants de départ, en une concentration de 80 % en poids au maximum, de préférence de 20 à 75 et, en particulier, d'environ 40 à 70 % en poids.

11. Procédé selon l'une des revendications 5 à 8, **caractérisé en ce que** le matériau fibreux est présent sous la forme de cordes de fibres unidirectionnelles, de tissu tissé ou de tissu non tissé et **en ce que**, de préférence, il contient des fibres de verre, des fibres de carbone, des fibres d'Aramide, des fibres de polyéthylène, des fibres de cellulose et / ou d'autres fibres synthétiques appropriées.

12. Procédé selon la revendication 11, **caractérisé en ce que**, avant la réaction de polyaddition, le matériau fibreux, est imprégné avec un mélange des composants de départ et qu'il est ensuite pressé sous la forme de plaques ou de feuilles, puis soumis à la réaction de polyaddition.

13. Procédé selon la revendication 6, **caractérisé en ce que** le durcissement de la préforme se fait sous une pression de 2 à 10 bars et / ou à une température de 80 à 150 °C et / ou sous une exposition à une lumière ayant une longueur d'onde de 300 à 500 nm ou à des micro-ondes ayant une longueur d'onde de 1 à 1000 mm.

14. Corps formé réalisé à partir d'une préforme obtenue par une réaction de polyaddition activée par un processus non radicalaire et ayant une matrice de polyuréthanne constituée d'un isocyanate, de monomères avec des doubles liaisons réactives contenant des groupes hydroxy, en particulier un méthacrylate contenant des groupes hydroxy et, le cas échéant, d'autres additifs, les monomères contenant des groupes hydroxy étant utilisés, par rapport à l'isocyanate, dans une proportion stoechiométrique ou dans une proportion inférieure à celle-ci et la préforme ayant une teneur en doubles liaisons réactives non susceptibles d'être extraites - déterminée par calorimétrie différentielle programmée - d'au moins 0,5 mmoles / g et étant exempte de monomères avec des doubles liaisons réactives susceptibles d'être extraits, **caractérisé en ce que** le corps formé se présente comme un article ou une pièce durci par une polymérisation radicalaire des doubles liaisons réactives et ayant une structure rigide qui peut éventuellement être expansée.

15. Corps formé selon la revendication 14, **caractérisé en ce qu'**avant la réaction de polyaddition, l'isocyanate et le méthacrylate contenant des groupes hydroxy, utilisés comme composants de départ, sont présents dans des proportions telles que le rapport des groupes OH sur les groupes NCO soit d'environ 1 : 1 et **en ce qu'**au moins un des composants de départ est au moins bifonctionnel et, de préférence, trifonctionnel ou polyfonctionnel.

16. Corps formé selon la revendication 14 ou la revendication 15, **caractérisé en ce qu'**il est incolore, transparent, cristallin et /ou perméable à l'air.

17. Corps formé selon l'une des revendications 14 à 16, **caractérisé en ce qu'**il contient au moins un des additifs suivants : charge, matériau fibreux, pigment coloré ; et / ou que sa surface a reçu un traitement, en particulier une enduction, une coloration, une décoration et / ou une texturation.

18. Corps formé selon l'une des revendications 14 à 17, **caractérisé en ce que** le corps formé durci, lié ou stratifié, est réalisé à partir d'au moins deux préformes susceptibles d'être durcies.

19. Corps formé à base de polyuréthanne, susceptible d'être obtenu par un procédé d'une des revendications 1 à 13.

20. Utilisation d'une préforme flexible, le cas échéant élastique, avec une matrice de polyuréthanne obtenue par une réaction de polyaddition activée par un processus non radicalaire et constituée d'un isocyanate, de monomères avec des doubles liaisons réactives contenant des groupes hydroxy, en particulier un méthacrylate contenant des groupes hydroxy et, le cas échéant, d'autres additifs, la préforme ayant une teneur en doubles liaisons réactives non susceptibles d'être extraites - déterminée par calorimétrie différentielle programmée - d'au moins 0,5 mmoles / g et étant exempte de monomères avec des doubles liaisons réactives susceptibles d'être extraits, pour fabriquer un article ou une pièce à structure rigide, par le durcissement de la préforme au moyen d'une polymérisation radicalaire, de préférence sans dégagement d'émissions, après ou pendant un formage mécanique additionnel de la préforme, exécuté en particulier sans perte de matériau.

21. Utilisation selon la revendication 20, dans laquelle le formage additionnel et le durcissement simultané ou subséquent de la préforme se font directement au lieu d'utilisation.

22. Utilisation selon la revendication 20 ou la revendication 21, pour fabriquer des pièces techniques, des éléments de construction et de renforcement, des conducteurs optiques, des éléments d'outils, des revêtements et des feuilles de protection, des éléments d'isolation électrique, thermique ou acoustique, des jouets, des objets d'usage courant, des objets artistiques ou des objets décoratifs.

23. Utilisation d'un corps formé selon l'une des revendications 14 à 19, pour fabriquer des pièces techniques, des éléments de construction et de renforcement, des conducteurs optiques, des éléments d'outils, des revêtements et des feuilles de protection, des éléments d'isolation électrique, thermique ou acoustique, des jouets, des objets d'usage courant, des objets artistiques ou des objets décoratifs

24. Utilisation selon l'une des revendications 20 - 23, pour une application en médecine, dans l'art dentaire, dans la construction et le bâtiment, dans les techniques de renforcement, dans les techniques d'isolation et d'emballage, dans la construction automobile, dans les techniques de mesure, dans les articles à usage domestique ou dans le domaine des arts plastiques.
